# EUROPÄISCHE PATENTSCHRIFT

(11) **EP 1 838 638 B1**
(45) Veröffentlichungstag und Bekanntmachung des Hinweises auf die Patenterteilung: **19.10.2016**
(21) Anmeldenummer: 04797804.4
(22) Anmeldetag: 11.11.2004
(51) Int. Cl.: C03B 5/12, C03B 5/235, C03C 1/00

(54) **VERFAHREN ZUR HERSTELLUNG VON DÄMMSTOFFEN AUS MINERALFASERN UND FÜLLUNG FÜR EIN SCHMELZAGGREGAT ZUR HERSTELLUNG EINER MINERALISCHEN SCHMELZE**
METHOD FOR THE PRODUCTION OF INSULATING MATERIALS MADE OF MINERAL FIBERS AND FILLING FOR A MELTING UNIT FOR THE PRODUCTION OF A MINERAL MELT
PROCEDE POUR PRODUIRE DES MATIERES ISOLANTES A PARTIR DE FIBRES MINERALES, ET MATIERE DE CHARGE POUR UNITE DE FUSION DESTINEE A LA PRODUCTION D'UNE MATIERE MINERALE EN FUSION

(43) Veröffentlichungstag der Anmeldung: 03.10.2007
(73) Patentinhaber: Rockwool International A/S, 2640 Hedehusene (DK)
(72) Erfinder: CHRISTMANN, Volker, 47475 Kamp-Lintfort (DE); GONZALEZ, CAPARROS, Miguel, 47228 Duisburg (DE); NYKIEL, Guido, 45964 Gladbeck (DE)
(74) Vertreter: Stenger Watzke Ring
(86) Internationale Anmeldenummer: PCT/EP2004/012766
(87) Internationale Veröffentlichungsnummer: WO 2006/053574

(56) Entgegenhaltungen:
- EP-A- 1 241 395
- WO-A-99/28253
- WO-A-2004/041734
- WO-A-2004/041735
- US-A- 4 822 388

## Beschreibung

Die Erfindung betrifft ein Verfahren zur Herstellung von Dämmstoffen aus Mineralfasern, insbesondere aus Glas- und/oder Steinwolle, bei dem ein Schmelzaggregat, insbesondere ein Kupolofen mit einem schmelzbaren Ausgangsmaterial zur Herstellung einer silikatischen Schmelze und einem Brennstoff befüllt wird, wobei der Brennstoff einem Primärenergieträger, insbesondere Gießereikoks und einen Substituenten aufweist, und die aus dem Ausgangsmaterial hergestellte Schmelze einer Zerfaserungseinrichtung zugeführt wird, in der die Schmelze in vorzugsweise mikrofeine Fasern zerfasert wird und die Fasern auf einer Fördereinrichtung als Vlies abgelegt werden. Die Erfindung betrifft ferner eine Füllung für ein Schmelzaggregat, insbesondere einen Kupolofen zur Herstellung einer mineralischen Schmelze, die einer Zerfaserungseinrichtung zur Herstellung von Mineralfasern, insbesondere Steinwolle oder Glaswollefasern zugeführt wird, wobei die Mineralfasern zur Bildung einer Mineralfaservliesbahn auf einem Sammelband abgelegt werden, bestehend aus einem schmelzbaren Ausgangsmaterial und einem Brennstoff, der aus einem Primärenergieträger, insbesondere Gießereikoks und einem Substituenten ausgebildet ist.

Dämmstoffe aus Mineralfasern werden aus silikatischen Schmelzen hergestellt. Hierzu wird ein silikatisches Ausgangsmaterial, beispielsweise Gläser, natürliches oder künstliches Gestein einem Schmelzaggregat, beispielsweise einem Kupolofen oder einem Schachtofen zugeführt. Die hieraus gewonnene silikatische Schmelze wird sodann einem Zerfaserungsaggregat zugeführt, in dem die silikatische Schmelze in mikrofeine Mineralfasern zerfasert wird. Die sodann einer Sammelkammer zugeleiteten Mineralfasern werden in der Regel mit Binde- und/oder Imprägnierungsmitteln benetzt und auf einer unterhalb der Sammelkammer angeordneten Fördereinrichtung, in der Regel handelt es sich hierbei um ein Förderband, abgelegt. Die mit Binde- und/oder Imprägniermitteln benetzten Mineralfasern bilden auf dem Fördermittel ein Mineralfaservlies, welches in nachgeschalteten thermischen und/oder mechanischen Einrichtungen in an sich bekannter Weise bearbeitet wird, um Dämmstoffe in Form von Bahnen, Platten, Formkörpern oder dergleichen herzustellen. Demzufolge bestehen Mineralfaser-Dämmstoffe aus glasig erstarrten Fasern, die mit geringen Bindemitteln punktweise miteinander verbunden sind.

Bei den Dämmstoffen aus Mineralfasern werden solche aus Glaswolle von solchen aus Steinwolle unterschieden. Mineralfaser-Dämmstoffe aus Glaswolle werden aus silikatischen Schmelzen mit relativ hohe Anteilen an Netzwerkwandlern, insbesondere Alkalien und Bor hergestellt. Die Rohstoffe werden in öl- oder gasbefeuerten Wannenöfen aufgeschmolzen. Die Zerfaserung erfolgt beispielsweise mit Hilfe des sogenannten TEL-Verfahrens, bei dem die Schmelze unter Einwirkung von Fliehkräften durch Öffnungen in den Wandungen eines rotierenden Körpers geleitet wird. Mit diesem Verfahren werden relativ lange und glatte Fasern erzeugt.

Steinwolle-Dämmstoffe wurden ursprünglich aus Gesteinen, wie Diabas, Basalt und Kalkstein, Dolomit erschmolzen. Zwischenzeitlich ist man vermehrt dazu übergangen, diese natürlichen Gesteine durch künstliche Gesteine zu ersetzen oder zusammen mit künstlichen Gesteinen dem Schmelzvorgang zuzuführen. In diesen künstlichen Gesteinen werden insbesondere Abfälle der Produktion verarbeitet, wobei die Abfälle auch aus erstarrten Schmelzen bestehen können, die bei der regelmäßigen Entleerung des Schmelzaggregats anfallen. Neben diesen Abfällen werden auch fehlerbehaftete Produktionschargen verarbeitet. Die Abfälle werden in einem ersten Schritt zerkleinert, anschließend mit Portlandzement als Bindemittel und Gesteinssplitt vermischt und schließlich zu künstlichen Gesteinen, sogenannten Formsteinen gepresst.

Die grobkörnigen Gesteine und/oder die entsprechend geformten Formsteine werden zusammen mit grobstückigem Koks als Primärenergieträger in das Schmelzaggregat, in der Regel in den Kupolofen eingefüllt. Weiterhin werden Zuschläge zugegeben, die ein Korngrößenspektrum von etwa 80 bis 200 mm aufweisen. Durch ein Beaufschlagen der Rohstoff-Koksäule von unten, d. h. nach dem Gegenstromprinzip mit der für die Verbrennung benötigten Luft wird der Koks oberhalb des Ofenbodens abgebrannt. Im Bereich der Lufteinleitung erreicht die Ofentemperatur eine Höhe, bei der die Gesteine und die Zuschläge aufschmelzen. Hierbei erhöht der Anteil bereits glasig erstarrter Abfälle die Schmelzgeschwindigkeit. Nach oben hin sinkt die Temperatur im Ofen ab, da die Wärmeenergie an die Gesteine und den Primärenergieträger abgegeben wird. Gleichzeitig sinkt der Sauerstoffgehalt im Ofen.

Durch eine nachträgliche Erhitzung der Abluft werden schädliche Kohlenstoffverbindungen in weniger schädliche oder unschädliche Verbindungen umgewandelt. Der Energieinhalt der Abluft wird anschließend mit Hilfe von Wärmetauschern an die Verbrennungsluft abgegeben.

Die in das Schmelzaggregat eingebrachten schmelzflüssigen Bestandteile der Rohstoffe sinken auf den Boden des Schmelzaggregates ab. Es kommt hierbei zu einer Saigerung, in der sich das vornehmlich aus den Gesteinen herausreduzierte Eisen am Boden sammelt und die zur Herstellung der Fasern benötigte, spezifisch leichtere Schmelze durch einen oberhalb des Bodens angeordneten Auslass ausgetragen wird. Die hier ausgetragene Schmelze wird anschließend einem Zerfaserungsaggregat zugeführt und zerfasert. Von der dem Zerfaserungsaggregat zugeführten Schmelze wird lediglich ein Anteil von 50% in Fasern umgewandelt. Die gröberen nichtfaserigen Bestandteile werden durch Windsichtung von den faserigen Bestandteilen getrennt.

Das sich im Bereich des Bodens ansammelnde Eisen muß regelmäßig abgelassen werden. Während des Ablassen des Eisens wird die Faserproduktion unterbrochen. Die zu diesem Zeitpunkt im Schmelzaggregat enthaltene Schmelze ist nach erneutem Anfahren des Schmelzaggregates nicht für die direkte Produktion von Dämmstoffen geeignet und wird demzufolge als Abfall im Zuge des Recyclings aufbereitet und der Produktion zugeführt.

Bei dem zumeist in Kupolöfen durchgeführten Schmelzvorgang besteht eine starke Abhängigkeit zwischen der Viskosität und der Temperatur. Ferner ist die Keimbildungszahl und somit die Neigung zur Kristallisation sehr hoch. Diese Eigenschaften führen bei der Bildung der Mineralfasern auf sogenannten Kaskaden-Spinnmaschinen zu relativ kurzen und in sich verwirbelten Mineralfasern. Die einzelnen Mineralfasern selbst sind glasig erstarrt. Aufgrund ihrer Zusammensetzung ist die Temperaturbeständigkeit der Mineralfasern aus einer Gesteinsschmelze höher als bei Dämmstoffen aus Glaswolle.

Von Bedeutung bei der Herstellung und Beurteilung von Mineralfasern ist die Biolöslichkeit, d.h. die Verweildauer der Mineralfasern im menschlichen Organismus. Die Biolöslichkeit von Dämmstoffen aus Steinwolle wird durch den Gehalt von Al₂O₃ maßgeblich beeinflußt. Mit zunehmenden Anteilen Al₂O₃ steigt zum einen die Temperaturbeständigkeit der Fasern und zum anderen in überraschender Weise auch die Biolöslichkeit.

Eine typische Zusammensetzung von biolöslichen Mineralfasern aus Steinwolle weist einen Anteil von SiO₂ zwischen 35 und 43 Masse-%, einen Anteil Al₂O₃ von 17,5 bis 23,5 Masse-%, einen Anteil von TiO₂ von 0,1 bis 3 Masse-%, einen Anteil von FeO von 1,7 bis 9,3 Masse-%, einen Anteil CaO + MgO von 23,5 bis 32 Masse-% und einen Anteil von K₂O + Na₂O von 1,3 bis 7 Masse-% auf.

Für die Wirtschaftlichkeit der als Massenprodukt angewendeten Dämmstoffe aus Steinwolle ist der Einsatz von Rohstoffen bedeutsam, die einen hohen Anteil an Al₂O₃ aufweisen. Natürliche Gesteine enthalten zwar vielfach Alumosilikate, diese liegen aber häufig nicht in den erforderlichen Konzentrationen bzw. nur zusammen mit unerwünschten Mineralien vor. Calcinierte Bauxite sind demgegenüber relativ teuer. Aus diesem Grunde werden vielfach Reststoffe verwertet, die bisher häufig ausschließlich deponierfähig waren und die wegen des Gehaltes an löslichen Stoffen nicht unerhebliche Risiken für die Umwelt darstellen. Gleichzeitig werden diese Reststoffe, die beispielsweise bei der Steinwolle-Herstellung anfallen, in Form von Schmelzenresten, abgetrennten, nicht faserigen Partikeln, Filterstäuben, fehlerhaften Produktionen oder dergleichen in einem primären Reststoff-Kreislauf fast vollständig wiederverwertet. Diese Reststoffe werden vor ihrer Verwertung entsprechend den Anforderungen der maschinellen Einrichtung, insbesondere der Schmelzaggregate aufbereitet. Beispielsweise werden die Reststoffe zur Verwertung zerkleinert und in unterschiedlichen Korngrößen miteinander bzw. mit anderen splittigen Rohstoffen vermischt, mit Bindemitteln, wie beispielsweise Zement versetzt und zu ausreichend großen Formkörpern verpresst, bevor diese Formkörper als grobstückige Rohstoffe einem Schachtofen bzw. einem Kupolofen zugeführt werden. Aus der EP 0 765 295 C1 ist beispielsweise bekannt, geeignete Formkörper aus feinkörnigen Rohstoffen auch mit Hilfe von Lignin zu binden. In der WO 94/12007 werden entsprechende Formköper mit molassehaltigem Bindemittel beschrieben.

Wie bereits ausgeführt wird als Primärenergieträger Koks eingesetzt. Die für das Aufschmelzen der Rohstoffe erforderliche Primärenergie beträgt bis zu 2 Megawatt pro Tonne Schmelze. Je nach Herkunft der für die Verkokung verwendeten Kohle beträgt der Gehalt an anorganischen Bestandteilen des Kokses (Aschegehalt) zwischen 6 und 10 Masse-%.

Als besonders geeigneter Brennstoff hat sich als Primärenergieträger Gießereikoks erwiesen. Der Gießereikoks hat einen hohen Brennwert von ca. 30.000 kJ/kg bei einem geringen Wassergehalt von weniger als 5 Masse-%. Darüber hinaus zeichnet sich Gießereikoks durch einen geringen Aschegehalt von weniger als 10 Masse-%, einen geringen Schwefelgehalt von weniger als 1 Masse-% sowie einen geringen Gehalt an flüchtigen Bestandteile von weniger als 1 Masse-% bei gleichzeitig hoher Trommelfestigkeit M80 von mehr als 75% aus. Zur berücksichtigen ist hierbei, dass die nichtbrennbaren Bestandteile des Kokses in die silikatische Schmelze eingebunden werden. Es werden daher Brennstoffe benötigt, deren nichtbrennbare Bestandteil gering sind und keine Belastung des Endprodukts darstellen.

Aus der US 4 822 388 ist es bekannt, den Koks zumindest überwiegend durch eine Ofenauskleidung von Öfen für die Herstellung von Aluminium zu ersetzen. Hierbei wird ein vollständiger Ersatz des Kokses als erstrebenswert dargestellt, wobei aber zumindest 60 % des Primärenergieträgers aus den Rückständen der Ofenauskleidung bestehen soll.

Weiterhin ist es aus der EP 1 241 395 A2 bekannt, bei der Herstellung von Dämmstoffen aus Mineralfasern den Primärenergieträger aus zumindest 50 Masse-% Koks und einem Gemenge aus einem Kohlenstoffträger und feuerfesten Steinen auszubilden, wobei das Gemenge aus Ofenausbrüchen, insbesondere der kathodischen Auskleidung von Öfen für die Herstellung von Aluminium gewonnen wird. Dieses vorbekannte Verfahren hat sich in der Praxis bewährt, da es neue Energiequellen für die Herstellung von Dämmstoffen aus Mineralfasern erschließt, die wesentlich preiswerter als Koks sind.

Ausgehend von diesem Stand der Technik liegt der Erfindung die Aufgabe zugrunde, ein erfindungsgemäßes Verfahren derart weiterzuentwickeln, dass die Durchführung eines erfindungsgemäßen Verfahrens durch eine weitere Erschließung von Rohstoffquellen wirtschaftlicher gestaltet wird. Hierbei sind aber gleichzeitig die üblichen Verfahrensparameter für die Herstellung einer geeigneten Schmelze zu beachten, so dass mit dem Verfahren gute Schmelzresultate ohne Verunreinigungen der Schmelze erbringt. Es ist ferner Aufgabe der Erfindung, eine kostengünstige Füllung für ein Schmelzaggregat zu schaffen, mit der eine kostengünstige Schmelze zur Zerfaserung in Mineralfasern für Dämmstoffe herstellbar, so dass die Produktion von Dämmstoffen mit erhöhter Wirtschaftlichkeit bei gleichbleibender Produktqualität durchführbar ist.

Die Lösung dieser Aufgabenstellung sieht bei einem gattungsgemäßen Verfahren vor, dass dem Brennstoff als Substituent verbrauchte, bei einer Schmelz-Elektrolyse verwendete Anoden mit einem Anteil von zumindest 15% bezogen auf die Gesamtmenge des Brennstoffs beigemischt wird. Zur Lösung der Aufgabenstellung ist ferner bei einer Füllung für ein Schmelzaggregat vorgesehen, dass der Substituent aus verbrauchten, bei einer Schmelz-Elektrolyse verwendete Anoden besteht, von denen im Brennstoff ein Anteil von zumindest 15% bezogen auf die Gesamtmenge des Brennstoffs enthalten ist.

Erfindungsgemäß ist daher vorgesehen, dass bei einem Verfahren zur Herstellung von Dämmstoffen aus Mineralfasern, insbesondere aus Glas- und/oder Steinwolle, bei dem ein Schmelzaggregat, insbesondere ein Kupolofen mit einem schmelzbaren Ausgangsmaterial zur Herstellung einer silikatischen Schmelze und einem Brennstoff befüllt wird, der Brennstoff neben einem Primärenergieträger, beispielsweise Gießereikoks einen Substituenten aufweist, der als verbrauchte, bei einer Schmelz-Elektrolyse verwendeten Anoden, insbesondere deren Reste mit einem Anteil von zumindest 15 % bezogen auf die Gesamtmenge des Brennstoffs beigemischt wird. Nach einem weiteren Merkmal der Erfindung ist vorgesehen, dass dem Brennstoff an einem Teil des Substituenten von bis zu 70 % bezogen auf die Gesamtmenge des Brennstoffs beigemischt wird. Bei den Anoden handelt es sich insbesondere um Anodenreste aus der Schmelz-Elektrolyse. Die Anoden werden meist im sogenannten Prebake-Verfahren hergestellt und bestehen aus Kohleblöcken, die aus hochviskosem kalziniertem Petrolkoks, Steinkohlenteerpech und Anodenresten gepresst und vorgebrannt werden. Hierbei ist Petrolkoks ein Produkt aus der Petrochemie, das bei der Raffination von Erdöl entsteht. Steinkohlenteerpech ist ein Nebenprodukt der Verkokung von Steinkohle in Kokereien der Stahlindustrie. Somit sind derartige Anoden im Wesentlichen aus recycelbaren Reststoffen anderer Industriezweige herstellbar.

Die Anoden werden blockförmig ausgebildet und in der Schmelz-Elektrolyse, beispielsweise für die Herstellung von Aluminium verwendet. Hierbei entsteht an der Kathode, beispielsweise der kathodischen Ausmauerung eines Schmelzofens Aluminium. An der Anode des Schmelzofens bildet sich Sauerstoff. Somit ist die Anode einem Verschleißprozess unterworfen, in dem sie zu CO₂ oxidiert. Am Ende des Verschleißprozesses verbleibt ein Rest der verbrauchte Anode, der bisher ausschließlich bei der Herstellung entsprechender Anoden wiederverwendbar ist. Entsprechende Anoden stellen ein sehr hartes Kohlenstoffprodukt dar, die einen Heizwert von ca. 33.000 kJ/kg bei einem Aschegehalt von maximal 4 Masse-%, einem Kohlenstoffgehalt von maximal 99 Masse-%, einem Natriumgehalt von maximal 0,8 Masse-%, einem Schwefelgehalt von maximal 1,5 Masse-%, einem Aluminiumgehalt von maximal 1 Masse-% und einem Fluorgehalt von maximal 1,8 Masse-% aufweisen.

Aufgrund ihrer chemischen Zusammensetzung und insbesondere des hohen Kohlenstoffgehaltes hat es sich nunmehr überraschend gezeigt, dass die Anodenreste als Primärenergieträger in Verbindung mit den üblicherweise verwendeten Bestandteilen des Brennstoffs, nämlich beispielsweise dem Gießereikoks zur Herstellung von Dämmstoffen aus Mineralfasern, insbesondere aus Glas- und/oder Steinwolle in einem Schmelzaggregat verwendet werden können.

Nach einem weiteren Merkmal der Erfindung ist vorgesehen, dass die Anoden bzw. Anodenreste vor dem Beimischen in den Brennstoff gereinigt werden. Insbesondere wird ein mechanisches Reinigungsverfahren durchgeführt, bei dem anhaftende Schmelzrückstände an den Oberflächen der Anoden bzw. Anodenresten entfernt werden, so dass ein, einen möglichst hohen Kohlenstoffgehalt aufweisender Anodenrest dem Brennstoff als Substituent eines Anteils des Primärenergieträgers beigemischt wird.

Für den Einsatz der Anoden in einem Kupolofen, der bei der Erfindung als bevorzugtes Schmelzaggregat vorgesehen ist, müssen die Anoden, abhängig von der Größe des Kupolofens, eine bestimmte Kornklasse aufweisen, um ein optimales Mischungs- und Verbrennungsverhalten der Füllung des Kupolofens zu erzielen. Hierbei sollen die Komponenten der Füllung eine lockere Schüttung bilden, die ausreichend offene Poren aufweist, so dass die im unteren Bereich des Kupolofens bei der Verbrennung entstehenden Gase mit hoher Temperatur durch die Schüttung diffundieren und die Schüttung aufheizen können. Es hat sich bei üblichen Kupolöfen daher als vorteilhaft erwiesen, die Anoden vor dem Befüllen des Schmelzaggregats auf eine mittlere Kornklasse zwischen 50 und 200 mm zu zerkleinern.

Es ist nach einem weiteren Merkmal der Erfindung vorgesehen, dass das Ausgangsmaterial und der Brennstoff einschließlich des Substituenten eine Füllung für das Schmelzaggregat bilden, welches aus bis zu 30 % Brennstoff einschließlich Substituenten und dem Rest schmelzbares Ausgangsmaterial zusammengesetzt wird. Demzufolge umfasst das schmelzbare Ausgangsmaterial bis zu 70 % der Füllung.

Das schmelzbare Ausgangsmaterial besteht nach einem weiteren Merkmal der Erfindung aus bis zu 50 % natürlichen Steinen, insbesondere Diabas und/oder Basalt und einem Rest aus künstlichen Formsteinen, wobei die Formsteine insbesondere bis zu 70 % aus recyceltem Mineralfasermaterial aus der Produktion und einem Rest rückgebauten Mineralfaserdämmstoffen bestehen. Das recycelte Mineralmaterial aus der Produktion besteht beispielsweise aus Abschnitten bzw. qualitativ minderwertigen Produkten, die dem Produktionsprozess entnommen werden. Die Formsteine werden aus feinkörnigem Material und den für die Formsteine erforderlichen Feststoffen zusammen mit als Stützkorn verwendeten Gesteinen mit latent hydraulischen Stoffen zu grobstückigen Körpern verpresst. Als latenthydraulische Stoffe können beispielsweise Portlandzement oder andere ähnlich wirkende Bindemittel verwendet werden, während als Stützkorn beispielsweise Gesteinssplit Verwendung findet.

Im Schmelzaggregat, insbesondere im Kupolofen wird eine derart vorbereitete Füllung säulenartig angeordnet, wobei die Füllung den Rohstoff, nämlich das schmelzfähige Ausgangsmaterial und den Brennstoff in Form des Primärenergieträgers und des Substituenten enthält. Der Füllung wird im Gegenstromprinzip die benötigte Verbrennungsluft zugeführt, so dass der Primärenergieträger oberhalb eines Schachtbodens des Schmelzaggregats abbrennt. Im Bereich der Einleitung der Verbrennungsluft erreicht die Atmosphäre im Schmelzaggregat eine Temperatur, die für das Schmelzen des schmelzfähigen Ausgangsmaterials ausreicht. Das schmelzfähige Ausgangsmaterial wird als Schmelze über einen Ausguss abgeführt und auf eine Zerfaserungseinrichtung geleitet, die in der Regel mehrere rotatorisch angetriebene Scheiben hat, auf deren Außenmantelfläche die Schmelze auftrifft und durch die Rotationsbewegung in einzelne Mineralfasern zerfasert wird, die anschließend mit einem Binde- und/oder Imprägniermittel beaufschlagt und auf einem Sammelband abgelegt werden.

Bei der Herstellung von Aluminium wird Aluminiumoxid unter Verwendung eines Flußmittels, beispielsweise Kryolith (Na₃AlF₆) in Elektrolyseöfen aufgeschmolzen und zu metallischem Aluminium reduziert. Hierzu verwendet man Elektrolysezellen, die aus einer Stahlwanne bestehen, die mit feuerfesten Steinen, beispielsweise Schamotte- und/oder Aluminiumoxid-Steinen ausgekleidet ist. Auf dieser keramischen Schicht ist eine Schicht elektrisch leitender Kohlenstoff- bzw. Graphitsteine und/oder -massen angeordnet, die den kathodischen Teil ausbildet.

Diese kathodische Auskleidung der Elektrolysezellen unterliegt ebenso wie die voranstehend beschriebenen und erfindungsgemäß verwendeten Anoden einem Verschleiß, der eine Revision durchschnittlich alle 5 Jahre erforderlich macht. Bei dieser Revision ist ein Abstellen der Elektrolyseöfen und eine Erneuerung der kathodischen Auskleidung erforderlich. Die verbrauchte Auskleidung besteht aus einem Gemenge, welches zur Hälfte aus Graphit und zur anderen Hälfte aus feuerfesten Steinen besteht. Eine vollständige Trennung dieser Bestandteile ist beim Ausbau nicht möglich, dennoch kann eine technisch sinnvolle Sortierung erfolgen.

In vorteilhafter Ausgestaltung der Erfindung ist vorgesehen, dass dem Brennstoff neben den Anoden als weitere Substituenten kohlenstoffreiche Abfallstoffe, insbesondere rückgebaute kathodische Auskleidungen von Schmelzaggregaten für die Herstellung von Aluminium beigemischt werden. Insbesondere ist vorgesehen, dass die Anteile der unterschiedlichen Substituenten bezogen auf die Menge oder den Kohlenstoffgehalt der einzelnen Anteile der unterschiedlichen Substituenten gleich sind. Demzufolge werden zumindest zwei Substituenten in übereinstimmender Menge oder entsprechend ihrem Kohlenstoffgehalt in unterschiedlichen Mengen dem Brennstoff beigemischt. Bei dieser Vorgehensweise ist es daher erforderlich zuerst den Kohlenstoffgehalt der Substituenten zu ermitteln und anschließend ein Mischungsverhältnis zu errechnen, so dass die beizumengenden Substituenten einen vorbestimmten Kohlenstoffgehalt aufweisen. Hierbei wird eine größere Menge eines einen geringen Kohlenstoffgehalts aufweisenden Substituenten mit einer geringeren Menge eines einen hohen Kohlenstoffgehalt aufweisenden Substituenten gemischt. Hierbei hat es sich als vorteilhaft erwiesen, dass die verbrauchte kathodische Auskleidung eines Elektrolyseofens in Verbindung mit den Anoden als Primärenergieträger in der Mineralwolleherstellung überaus wirtschaftlich einsetzbar ist.

Üblicherweise enthält die kohlenstoffreiche Fraktion der kathodischen Auskleidung, die vorzugsweise erfindungsgemäß verwendet wird, 40 bis 60 Masse-% Kohlenstoff sowie 4 bis 12 Masse-% SiO₂, 26 bis 56 Masse-% Al₂O₃, 6 bis 14 Masse-% FeO/Fe₂O₃, 21 bis 41 Masse-% Na₂O und 1,8 bis 3,6 Masse-% SO₃.

Beim Einsatz der kathodischen Auskleidung in Verbindung mit den Anoden als Teil des Primärenergieträgers werden die in der Auskleidung enthaltenen Cyanverbindungen während des Schmelzvorgangs zerstört und in weniger schädliche, zumindest nicht-toxische Stickstoffverbindungen umgewandelt. Hierbei entstehende Rückstände können somit wesentlich einfacher und damit kostengünstiger und umweltverträglicher entsorgt und deponiert werden.

Weitere Merkmale des erfindungsgemäßen Verfahrens bzw. der erfindungsgemäßen Schmelze ergeben sich aus den Unteransprüchen und der nachfolgenden Beschreibung der zugehörigen Zeichnung, in der ein schematischer Aufbau einer Füllung in einem Kupolofen dargestellt ist. Ferner ergeben sich weitere Merkmale aus der nachfolgenden Beschreibung eines Ausführungsbeispiels.

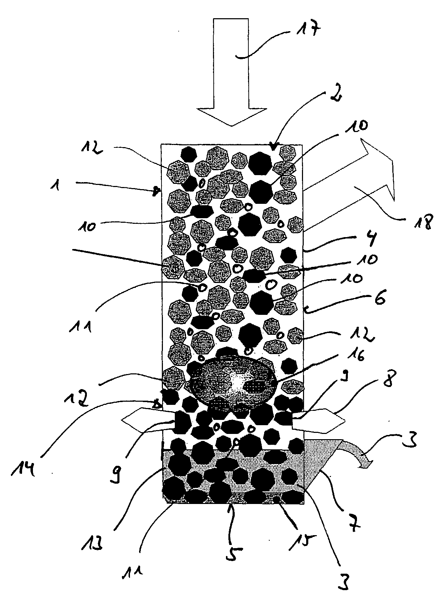

In der Zeichnung ist ein Kupolofen 1 schematisch dargestellt, in dem eine Füllung 2 zur Herstellung einer mineralischen Schmelze 3 angeordnet ist, welche einer nicht näher dargestellten Zerfaserungseinrichtung zur Herstellung von Mineralfasern zuführbar ist, welche Mineralfasern zur Bildung einer Mineralfaservliesbahn auf einem Sammelband abgelegt werden.

Der Kupolofen 1 besteht aus einem zylindrischen Gehäuse mit einem Boden 5 und einer Seitenwandung 6, die im unteren, nämlich dem Boden 5 zugewandten Bereich eine Ausgussöffnung 7 aufweist, über die die Schmelze 3 aus dem Kupolofen 1 austritt. Oberhalb der Ausgussöffnung 7 ist eine Ringleitung 8 angeordnet, die in gleichmäßigen Abständen über den Umfang der Seitenwandung 6 verteilt angeordnete Eintrittsdüsen hat, über welche Primärwind in den Kupolofen 1 eingeblasen wird.

Die Füllung 2 besteht aus einem Brennstoff, der einen Primärenergieträger in Form von Gießereikoks 10 und einen Substituenten 11 aufweist, der aus Anoden aus der Schmelz-Elektrolyse besteht.

Der Brennstoff enthält 70 Masse-% Gießereikoks 10 und 30 Masse-% Substituent 11. Neben dem Brennstoff ist ein schmelzfähiges Ausgangsmaterial 12 Bestandteil der Füllung. Das schmelzbare Ausgangsmaterial 12 besteht zu 40 Masse-% aus natürlichen Steinen, nämlich Diabas und Basalt und zu 60 Masse-% aus künstlichen Formsteinen, die wiederum zu 60 Masse-% aus im Produktionsprozess entstandenem Recyclingmaterial und zu 40 Masse-% aus rückgebauten Mineralfaser-Dämmstoffen bestehen. Ergänzend weisen diese Formsteine latenthydraulische Stoffe, nämlich Portlandzement und Gesteinssplit als Stützkorn auf, welche Bestandteile das Pressen der künstlichen Formsteine ermöglichen bzw. erleichtern.

In dem Kupolofen 1 unterscheidet man im unteren Bereich des Kupolofens 1 oberhalb des Bodens 5 den Sumpf 13 von dem Koksbett 14, wobei das Koksbett 14 den Sumpf 13 und den Bodenbereich mit einer Schicht 15 aus reduziertem Eisen umfasst. Der Sumpf 13 ist der Bereich im Kupolofen, in dem sich die Schmelze 3 neben dem Brennstoff befindet. Oberhalb des Sumpfes 3 befindet sich im Bereich der Ringleitung 8 ein Abschnitt des Koksbettes 14, in dem ausschließlich Brennstoff vorhanden ist, der in diesem Bereich verbrannt wird und die für das Aufschmelzen des Ausgangsmaterials 12 notwendige Schmelztemperatur bereitstellt. Oberhalb des Koksbettes ist eine Schmelzzone 16 angeordnet, in der das schmelzbare Ausgangsmaterial 12 geschmolzen wird, welches sodann in den Sumpf abfließt und bei Erreichen eines bestimmten, durch die Ausgangsöffnung 7 vorbestimmten Pegels über die Ausgangsöffnung 7 abfließt.

Die Füllung 2 wird gemäß einem Pfeil 17 in das Gehäuse 4 des Kupolofens 1 eingegeben, wobei in der Regel die Bestandteile der Füllung 2 nach einem vorgegebenen Schema abwechselnd aufgeschüttet werden. Es kann aber auch vorgesehen sein, dass die Bestandteile der Füllung 2, nämlich das Ausgangsmaterial 12 und der Brennstoff, bestehend aus dem Gießereikoks 10 und dem Substituenten 11 vor Aufgabe in den Kupolofen 1 gemischt werden.

Bei der Verbrennung des Brennstoffs entstehende Rauchgase werden im oberen Bereich des Kupolofens 1 gemäß einem Pfeil 18 abgeführt und gegebenenfalls zur Aufheizung des Kupolofens 1 verwendet.

## Patentansprüche

1. Verfahren zur Herstellung von Dämmstoffen aus Mineralfasern, insbesondere aus Glas- und/oder Steinwolle, bei dem ein Schmelzaggregat, insbesondere ein Kupolofen mit einem schmelzbaren Ausgangsmaterial zur Herstellung einer silikatischen Schmelze und einem Brennstoff befüllt wird, wobei der Brennstoff einem Primärenergieträger, insbesondere Gießereikoks und einen Substituenten aufweist, und die aus dem Ausgangsmaterial hergestellte Schmelze einer Zerfaserungseinrichtung zugeführt wird, in der die Schmelze in vorzugsweise mikrofeine Fasern zerfasert wird und die Fasern auf einer Fördereinrichtung als Vlies abgelegt werden,
**dadurch gekennzeichnet,**
**dass** dem Brennstoff als Substituent verbrauchte, bei einer Schmelz-Elektrolyse verwendete Anoden mit einem Anteil von zumindest 15% bezogen auf die Gesamtmenge des Brennstoffs beigemischt wird.

2. Verfahren nach Anspruch 1,
**dadurch gekennzeichnet,**
**dass** dem Brennstoff ein Anteil des Substituenten von bis zu 70% bezogen auf die Gesamtmenge des Brennstoffs beigemischt wird.

3. Verfahren nach Anspruch 1,
**dadurch gekennzeichnet,**
**dass** die Anoden vor dem Beimischen in den Brennstoff gereinigt werden.

4. Verfahren nach Anspruch 3,
**dadurch gekennzeichnet,**
**dass** die Reinigung der Anoden mechanisch durchgeführt wird.

5. Verfahren nach Anspruch 1,
**dadurch gekennzeichnet,**
**dass** die Anoden vor dem Befüllen des Schmelzaggregats auf eine mittlere Kornklasse zwischen 50 und 200 mm zerkleinert werden.

6. Verfahren nach Anspruch 1,
**dadurch gekennzeichnet,**
**dass** das Ausgangsmaterial und der Brennstoff einschließlich des Substituenten eine Füllung für das Schmelzaggregat bilden, welches aus bis zu 30% Brennstoff einschließlich Substituenten und dem Rest schmelzbares Ausgangsmaterial zusammengesetzt wird.

7. Verfahren nach Anspruch 1,
**dadurch gekennzeichnet,**
**dass** das schmelzbare Ausgangsmaterial aus bis zu 50% natürlichen Steinen, insbesondere Diabas und/oder Basalt und einem Rest aus künstlichen Formsteinen zusammengesetzt wird, wobei die Formsteine insbesondere bis zu 70% aus recyceltem Mineralfasermaterial aus der Produktion und einem Rest rückgebauten Mineralfaserdämmstoffen bestehen.

8. Verfahren nach Anspruch 7,
**dadurch gekennzeichnet,**
**dass** die Formsteine aus feinkörnigem Material, insbesondere mit einer mittleren Kornklasse zwischen 0,2 und 3 mm, zumindest einem Bindemittel und als Stützkorn vorgesehenen Gesteinen zu grobstückigen Körpern verpresst werden, wobei als Bindemittel latenthydraulische Stoffe verwendet werden.

9. Verfahren nach Anspruch 1,
**dadurch gekennzeichnet,**
**dass** dem Brennstoff neben den Anoden als weitere Substituenten kohlenstoffreiche Abfallstoffe, insbesondere rückgebaute kathodische Auskleidungen von Schmelzaggregaten für die Herstellung von Aluminium beigemischt werden.

10. Verfahren nach Anspruch 9,
**dadurch gekennzeichnet,**
**dass** die Anteile der unterschiedlichen Substituenten bezogen auf die Menge oder den Kohlenstoffgehalt der einzelnen Anteile der unterschiedlichen Substituenten gleich sind.

11. Füllung für ein Schmelzaggregat, insbesondere einen Kupolofen zur Herstellung einer mineralischen Schmelze, die einer Zerfaserungseinrichtung zur Herstellung von Mineralfasern, insbesondere Steinwolle oder Glaswollefasern zugeführt wird, wobei die Mineralfasern zur Bildung einer Mineralfaservliesbahn auf einem Sammelband abgelegt werden, bestehend aus einem schmelzbaren Ausgangsmaterial und einem Brennstoff, der aus einem Primärenergieträger, insbesondere Gießereikoks und einem Substituenten ausgebildet ist,
**dadurch gekennzeichnet,**
**dass** der Substituent (11) aus verbrauchten, bei einer Schmelz-Elektrolyse verwendete Anoden besteht, von denen im Brennstoff ein Anteil von zumindest 15% bezogen auf die Gesamtmenge des Brennstoffs enthalten ist.

12. Füllung nach Anspruch 11,
**dadurch gekennzeichnet,**
**dass** der Anteil des Substituenten (11) bis zu 70% bezogen auf die Gesamtmenge des Brennstoffs beträgt.

13. Füllung nach Anspruch 11,
**dadurch gekennzeichnet,**
**dass** die Anoden eine mittlere Kornklasse zwischen 50 und 200 mm aufweisen.

14. Füllung nach Anspruch 11,
**gekennzeichnet,**
**durch** bis zu 30% Brennstoff einschließlich Substituenten (11) und dem Rest schmelzbares Ausgangsmaterial.

15. Füllung nach Anspruch 11,
**dadurch gekennzeichnet,**
**dass** das schmelzbare Ausgangsmaterial (12) bis zu 50% natürliche Steine, insbesondere Diabas und/oder Basalt und einen Rest künstliche Formsteine aufweist, wobei die Formsteine insbesondere bis zu 70% aus recyceltem Mineralfasermaterial aus der Produktion und einem Rest rückgebauten Mineralfaserdämmstoffen bestehten.

16. Füllung nach Anspruch 15,
**dadurch gekennzeichnet,**
**dass** die Formsteine grobstückigen Körpern bestehen, die aus feinkörnigem Material, insbesondere mit einer mittleren Kornklasse zwischen 0,2 und 3 mm, zumindest einem Bindemittel und als Stützkorn vorgesehenen Gesteinen verpresst sind, wobei als Bindemittel latenthydraulische Stoffe enthalten sind.

17. Füllung nach Anspruch 11,
**dadurch gekennzeichnet,**
**dass** der Brennstoff neben den Anoden als weitere Substituenten (11) kohlenstoffreiche Abfallstoffe, insbesondere rückgebaute kathodische Auskleidungen von Schmelzaggregaten für die Herstellung von Aluminium enthält.

18. Füllung nach Anspruch 11,
**dadurch gekennzeichnet,**
**dass** die Anteile der unterschiedlichen Substituenten (11) bezogen auf die Menge oder den Kohlenstoffgehalt der einzelnen Anteile der unterschiedlichen Substituenten (11) im Brennstoff gleich sind.

## Claims

1. Method for the production of insulating materials made of mineral fibers, particularly glass wool and/or rock wool, in which method a melting unit, particularly a cupola furnace, is charged with a meltable starting material for the production of a silicate melt and with a fuel, wherein the fuel includes a source of primary energy, particularly foundry coke, and a substituent, and wherein the melt made of said starting material is supplied to a defibering unit in which the melt is defibered into preferably micro-fine fibers and in which the fibers are deposited as non-woven web on a conveyor device,
**characterized in that** used anodes employed in an electrolytic smelting process are added to the fuel in amount of at least 15% based on the total amount of the fuel.

2. Method according to claim 1,
**characterized in that** there is added to the fuel an amount of the substituent of up to 70% based on the total amount of the fuel.

3. Method according to claim 1,
**characterized in that** the anodes are cleaned before being admixed to the fuel.

4. Method according to claim 3,
**characterized in that** the cleaning of the anodes takes place mechanically.

5. Method according to claim 1,
**characterized in that** prior to charging the melting unit, the anodes are reduced to a mean grain size of between 50 and 200 mm.

6. Method according to claim 1,
**characterized in that** the starting material and the fuel, including the substituent, constitute a charge for said melting unit that is composed of up to 30% fuel, including the substituent, and of meltable starting material for the rest.

7. Method according to claim 1,
**characterized in that** the meltable starting material is composed for up to 50% of natural stones, particularly diabase and/or basalt, and of artificial shaped blocks for the rest, wherein said shaped blocks particularly consist for up to 70% of recycled mineral fiber material from production and of dismantled mineral fiber insulation material for the rest.

8. Method according to claim 7,
**characterized in that** the shaped blocks made of fine-grained material, particularly with a mean grain size of between 0.2 and 3 mm, and at least a binder, and rocks provided as a supporting grain are compacted into chunky corps, wherein latent hydraulic substances are used as a binder.

9. Method according to claim 1,
**characterized in that** in addition to the anodes there are added as further substituents high carbon waste products, particularly dismantled cathodic linings of melting units for the production of aluminum.

10. Method according to claim 9,
**characterized in that** the shares of the different substituents based on the amount or the carbon content of the individual shares of the different substituents are equal.

11. Filling for a melting unit, in particular for a cupola furnace for the production of a mineral melt, which filling is supplied to a defibering unit for producing mineral fibers, particularly rock wool or glass wool fibers, wherein the mineral fibers are deposited on collecting conveyor for forming a non-woven web of mineral fibers consisting of a meltable starting material and a fuel formed of a source of primary energy, particularly foundry coke, and a substituent,
**characterized in that** said substituent (11) consists of used anodes employed in an electrolytic smelting process, said anodes being contained in the fuel in amount of at least 15% based on the total amount of the fuel.

12. Filling according to claim 11,
**characterized in that** the amount of the substituent (11) is at least up to 70% based on the total amount of the fuel.

13. Filling according to claim 11,
**characterized in that** the anodes have a mean grain size of between 50 and 200 mm.

14. Filling according to claim 11,
**characterized by** up to 30% of the fuel, including the substituent (11), and meltable starting material for the rest.

15. Filling according to claim 11,
**characterized in that** the meltable starting material (12) includes up to 50% of natural stones, particularly diabase and/or basalt, and artificial shaped blocks for the rest, wherein said shaped blocks particularly consist of up to 70% of recycled mineral fiber material from production and of dismantled mineral fiber insulating materials for the rest.

16. Filling according to claim 15,
**characterized in that** said shaped blocks consist of chunky bodies that are compacted from fine-grained material, which particularly has a mean grain size of between 0.2 and 3 mm, at least a binder and rocks provided as a supporting grain, wherein latent hydraulic substances are contained as a binder.

17. Filling according to claim 11,
**characterized in that** in addition to said anodes, the fuel contains as further substituents (11) high carbon waste products, particularly dismantled cathodic linings of melting units for the production of aluminum.

18. Filling according to claim 11,
**characterized in that** the shares of the different substituents (11) based on the amount or carbon content of the individual shares of the different substituents (11) in the fuel are equal.

## Revendications

1. Procédé pour produire des matières isolantes à partir de fibres minérales, notamment à partir de laine de verre et/ou laine de roche, dans lequel procédé une unité de fusion, en particulier un cubilot, est chargé d'une matière première fusible destinée à produire une matière fondue au silicate, et d'un combustible, ledit combustible comprenant de sources d'énergie primaire, en particulier le coke de fonderie, et un substituant, et la matière fondue produite à partir de la matière première étant acheminée vers un dispositif de défibrage, dans lequel la matière fondue est défibrée de préférence en fibres micro-fines et les fibres sont déposées sous la forme d'un non-tissé sur un transporteur,
**caractérisé en ce que** des anodes usagées employées dans un électrolyse de fusion sont mélangées au combustible en tant que substituant à une quantité d'au moins 15% par rapport à la quantité totale du combustible.

2. Procédé selon la revendication 1,
**caractérisé en ce qu'**on mélange au combustible une quantité de substituant allant jusqu'à 70% par rapport à la quantité totale du combustible.

3. Procédé selon la revendication 1,
**caractérisé en ce qu'**on nettoie les anodes avant de les mélanger au combustible.

4. Procédé selon la revendication 3,
**caractérisé en ce que** le nettoyage des anodes est réalisé d'une manière mécanique.

5. Procédé selon la revendication 1,
**caractérisé en ce que** les anodes, avant le chargement dans l'unité de fusion, sont broyées de sorte à obtenir une fraction moyenne entre 50 et 200 mm.

6. Procédé selon la revendication 1,
**caractérisé en ce que** la matière première et le combustible, y compris le substituant, forment une charge pour l'unité de fusion composée d'un combustible allant jusqu'à 30%, y incluses les substituants, et de la matière première fusible pour le reste.

7. Procédé selon la revendication 1,
**caractérisé en ce que** la matière première fusible est composée de pierres naturelles allant jusqu'à 50%, notamment diabase et/ou basalte, et de briques artificielles pour le reste, les briques consistant surtout en un matériau à fibres minérales recyclé provenant de la production allant jusqu'à 70% et en matières isolantes à partir de fibres minérales démantelées pour le reste.

8. Procédé selon la revendication 7,
**caractérisé en ce qu'**on comprime les briques constituées d'un matériau à grain fin, notamment avec une taille moyenne de grains entre 0,2 et 3 mm, d'au moins un liant et de roches prévues en tant que grain de support, pour former des corps en gros morceaux et on utilise des matières à hydraulicité latente en tant que liant.

9. Procédé selon la revendication 1,
**caractérisé en ce qu'**on ajoute au combustible, en plus des anodes, des déchets riches en carbone, notamment des revêtements cathodiques d'agrégats de fusion pour la production d'aluminium, tant qu'un autre substituant.

10. Procédé selon la revendication 9,
**caractérisé en ce que** les fractions des substituants différents par rapport à la quantité ou la teneur en carbone des fractions individuelles des substituants différents, sont égaux.

11. Matière de charge pour unité de fusion, notamment un cubilot pour produire une matière minérale en fusion acheminée vers un dispositif de défibrage destiné à la production des fibres minérales, en particulier des fibres en laine de roche ou en laine de verre, les fibres minérales étant déposées sur une bande collectionneuse pour former une nappe de fibres minérales non-tissée constituée d'une matière première fusible et d'un combustible constitué de sources d'énergie primaire, en particulier le coke de fonderie, et d'un substituant,
**caractérisée en ce que** le substituant (11) est constitué des anodes usagées employées dans un électrolyse de fusion dont une quantité d'au moins 15% par rapport à la quantité totale du combustible est contenue dans le combustible.

12. Matière de charge selon la revendication 11,
**caractérisée en ce que** la quantité du substituant (11) couvre jusqu'à 70% par rapport à la quantité totale du combustible.

13. Matière de charge selon la revendication 11,
**caractérisée en ce que** la taille moyenne de grains est entre 50 et 200 mm.

14. Matière de charge selon la revendication 11,
**caractérisée par** un combustible couvrant jusqu'à 30%, y incluses les substituants (11), et par une matière première fusible pour le reste.

15. Matière de charge selon la revendication 11,
**caractérisée en ce que** la matière première fusible (12) comprend des pierres naturelles allant jusqu'à 50%, notamment diabase et/ou basalte, et des briques artificielles pour le reste, les briques consistant surtout en un matériau à fibres minérales recyclé provenant de la production et allant jusqu'à 70% et en matières isolantes à partir de fibres minérales démantelées pour le reste.

16. Matière de charge selon la revendication 15,
**caractérisée en ce que** les briques consistent en corps en gros morceaux comprimés à partir d'un matériau à grain fin, notamment avec une taille moyenne de grains entre 0,2 et 3 mm, d'au moins un liant et des roches prévues en tant que grain de support, des matières à hydraulicité latente étant contenues en tant que liant.

17. Matière de charge selon la revendication 11,
**caractérisée en ce que** le combustible contient tant qu'autres substituants (11) des déchets riches en carbone notamment des revêtements cathodiques d'unités de fusion pour la production d'aluminium, en plus des anodes.

18. Matière de charge selon la revendication 11,
**caractérisée en ce que** les fractions des substituants (11) différents par rapport à la quantité ou la teneur en carbone des fractions individuelles des substituants différents sont égaux.
